## Europäisches Patentamt
## European Patent Office
## Office européen des brevets

(19)

(11) Publication number: **0 010 835**
**A1**

(12)

# EUROPEAN PATENT APPLICATION

(21) Application number: 79301486.1

(22) Date of filing: 25.07.79

(51) Int. Cl.³: **F 16 L 11/12, F 16 L 9/12,**
**H 05 F 3/02**

(30) Priority: 25.07.78 DE 2832547

(43) Date of publication of application: 14.05.80
**Bulletin 80/10**

(84) Designated Contracting States: **AT BE CH DE FR GB IT**
**LU NL SE**

(71) Applicant: **Wirsbo Pex G.m.b.H., Postfach 1128, D-6056**
**Heusenstamm/Offenbach (DE)**

(72) Inventor: **Haenelt, Stefan, Ernst-Leitz-Strasse 18,**
**D-6056 Heusenstamm (DE)**
Inventor: **Imgram, Friedrich, Ernst-Leitz-Strasse 18,**
**D-6056 Heusenstamm (DE)**

(74) Representative: **Evans, David Charles et al, F.J.**
**CLEVELAND & COMPANY 40-43, Chancery Lane,**
**London, WC2A 1JQ (GB)**

(54) **Plastics tube or hose with magnetic or electrically conductive strip.**

(57) This invention relates to a plastics tube or hose (1) having a magnetic or electrically conductive strip (2, 3). The strip (2, 3) is disposed in and/or on an outer surface of the tube (1) so that location of the tube or hose (1) can be effected by means of detectors or probes.

COMPLETE DOCUMENT

EP 0 010 835 A1

DESCRIPTION

TITLE MODIFIED
see front page

This invention relates to a plastics tube or hose. Tubes or hoses of this kind are increasingly used for domestic installations. After they have been installed and covered, however, it is a disadvantage that they cannot be located by means of conventional measuring instruments. Consequently, if the installation is to be changed, it is necessary to remove complete wall surfaces. Such tubes or hoses may also be unintentionally damaged on subsequent fitting of fixing elements.

The object of the invention is to obviate this disadvantage and so devise a plastics tube or hose that it can be located with known detectors or probes.

According to the invention, therefore, at least one strip of an electrically or magnetically conductive material is disposed in and/or on its outer surface.

A strip of this kind can be applied or vapour-coated on the inner or outer wall surface of the tube or hose in the form of a solid strip, e.g., consisting of a metal which has previously been given a plastics coating.

The strip can pass through the extruder nozzle on extrusion, by a suitable supply of material together with the remaining wall material, so that the strip is embedded in the wall material.

Various aspects of the invention in these directions will be apparent from the attached claims.

In one exemplified embodiment of the invention, metal powder or carbon black or graphite powder is added to the material for a separately

- 4 -

produced profiled strip which is applied to the outer wall immediately after extrusion of the tube or hose, and is partly rolled into, welded or pressed into the outer wall. This step not only solves the above problem, but also provides an otherwise smooth tube or hose wall with a surface which facilitates handling, e.g., when fittings are applied.

The invention is explained in detail by way of example hereinafter with reference to the drawings wherein:

FIGURE 1 is a first exemplified embodiment of the invention and

FIGURE 2 is a second preferred embodiment of the invention.

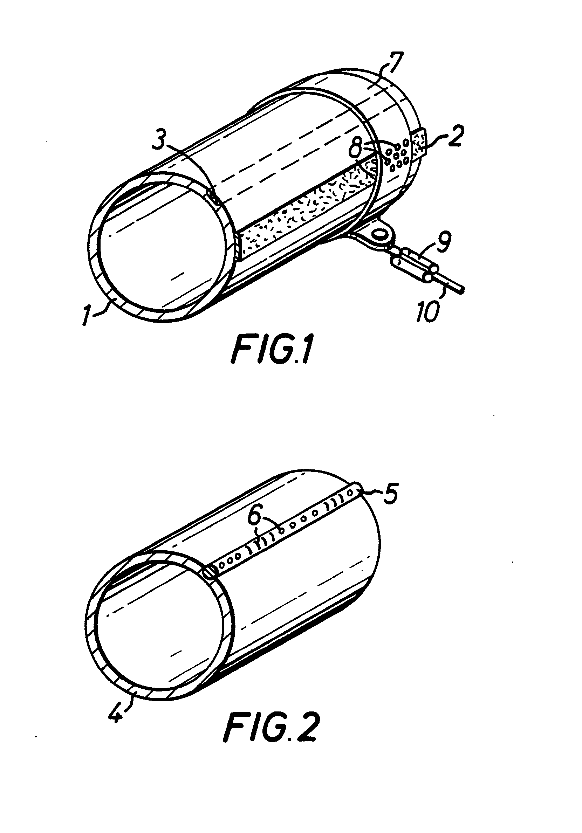

FIGURE 1 is a diagram showing a piece of a plastics tube or hose made, for example, from a cross-linked or non-cross-linked polyolefin. The tubes may alternatively be made from thermosetting plastics. The tube having the general reference 1 has a metal strip 2 which is applied to its outer surface and which is given a plastics

0010835

- 5 -

coating beforehand for better connection to the still hot tube coming from the extruder, said metal strip being rolled, welded or pressed onto the outer surface.

Alternatively, a strip of this kind can be subsequently vapour-coated on to the finished tube material, although the abrasion resistance of such coatings is not very high.

A coating or strip 2 of this kind may also serve as an identification strip for a specific manufacturer and, if required, have a coloured coating on the outside.

Alternatively or additionally, a strip of metal or graphite of this kind can be embedded, inter alia, into the tube wall material. A strip or jacket 3 of this kind in FIGURE 1 is advantageously produced by feeding the raw material to the extruder, and it emerges from the extruder nozzle together with the wall material of the tube 1.

In a preferred exemplified embodiment shown diagrammatically in FIGURE 2, a profiled strip

- 6 -

5 is applied to the outer surface of a tube 4. Instead of one such strip, a plurality of strips may be provided over the periphery.

This strip 5, which contains a metal or graphite strip, is preferably prefabricated and fed to the tube 4 after emerging from the extruder and is rolled on to the tube or partly rolled into the wall or applied by a CO extrusion. Additional embossings 6 may be provided in the strip 5 in these conditions. The strip which partially softens on application then hardens together with the wall material of the tube 4.

The profiled strip 5 projects slightly from the outer surface and thus provides increased facility of handling of the tube in the peripheral direction, this being an advantage on installation and, where applicable, for applying fittings.

In all the exemplified embodiments illustrated it is possible in principle to use a thin metal wire or a thin metal strip in band or wire form.

In a very simple production process, the material of the strip according to the invention is mixed with a metal powder or with graphite powder, and the finished strip is produced from this by extrusion or the like. This strip can then be connected to the tube wall in the manner specified.

It will be seen that depending upon the intended purpose different features can be used in order further to develop the basic principle of the invention.

Thus a plastics tube or hose having a metal strip provided according to the invention has another possible application. It can be used to carry off the static charge of such a plastics tube or hose in endangered areas. To this end, metal tube clips or metal couplings 7 can be applied to the tube at suitable intervals and have teeth or lugs 8 projecting on their inside. This ensures good electrical contact with the metal strip. The pipe clip can then be earthed via a cable shoe 9 by means of a cable 10.

Static charges can be carried off in this way.

0010835

CLAIMS

1.        A plastics tube or hose characterised
in that a strip of an electrically or magnetically
conductive material is disposed in and/or on its
outer surface.

2.        A plastics tube or hose according to
Claim 1, characterised in that the strip is embedded in the wall.

3.        A plastics tube or hose according to
Claim 1 or 2, characterised in that the strip is
embedded in one or more profiled strips connected
to the wall.

4.        A plastics tube or hose according to
Claim 3, characterised in that the profiled strip projects out through the wall.

5. A plastics tube or hose according to Claim 3 or 4, characterised in that the profiled strip is applied to and rolled into the still hot wall of the tube or hose after it has been extruded.

6. A plastics tube or hose according to any one of Claims 1 to 5, characterised in that the strip contains metal powder.

7. A plastics tube or hose according to any one of Claims 1 to 5, characterised in that the strip contains graphite powder or carbon black.

8. A plastics tube or hose according to any one of Claims 3 to 7, characterised in that the powder is admixed with the profiled strip material.

9. A plastics tube or hose according to any one of Claims 3 to 8, characterised in that the profiled strip is additionally profiled by embossings.

10. A plastics tube or hose according to any one of the preceding Claims, characterised in that the strip is earthed via a tube or hose clip.

0010835

- 10 -

11.      A plastics tube or hose according to
any one of the preceding Claims, characterised
in that the electrically or magnetically conductive material is embedded in the entire wall.

12.      A plastics tube or hose according to
any one of the preceding Claims, characterised
in that it consists of a cross-linked polyolefin.

FIG.1

FIG.2

## DOCUMENTS CONSIDERED TO BE RELEVANT

| Category | Citation of document with indication, where appropriate, of relevant passages | Relevant to claim |
|---|---|---|
| | DE - U - 1 722 682 (DYNAMIT AG) <br> * claims 1 to 10; page 2, lines 4 to 10 * | 1-8, 10,11 |
| | DE - A - 1 775 006 (A.G. PETZETAKIS) <br> * page 6, lines 20 to 22; fig. 1 to 6 * | 1-3,10 |
| | GB - A - 1 430 604 (AEROQUIP AG) <br> * page 2, lines 17 to 47; fig. 1 to 5 * | 1,2, 5-8 |
| | DE - U - 7 534 723 (R. ZEISSIG) <br> * claim 1; fig. 1 * | 1,2, 7,8 |
| | DE - A - 2 103 394 (CONTINENTAL) <br> * claims 1, 7, 8; fig. 1, 2 * | 1,2,7 |
| | DE - A - 2 248 441 (H. BERGEMANN) <br> * page 1, lines 1 to 3; fig. 1 to 3 * | 1,2 |
| | DE - U - 1 889 259 (J.H. BENECKE) <br> * claims 1, 3; page 4, lines 13 to 20 * | 1,3, 6-8 |

**CLASSIFICATION OF THE APPLICATION (Int. Cl.3)**

F 16 L 11/12
F 16 L 9/12
H 05 F 3/02

**TECHNICAL FIELDS SEARCHED (Int.Cl.3)**

F 16 L 9/00
F 16 L 11/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| X | The present search report has been drawn up for all claims | |

| Place of search | Date of completion of the search | Examiner |
|---|---|---|
| Berlin | 11-10-1979 | SCHLABBACH |

EPO Form 1503.1 06.78